# EUROPEAN PATENT SPECIFICATION

(11) **EP 2 199 170 B1**
(45) Date of publication and mention of the grant of the patent: **07.09.2011**
(21) Application number: 08425804.5
(22) Date of filing: 18.12.2008
(51) Int. Cl.: B60W 30/18

(54) **Method for the activation and the deactivation of the stop and start function in a vehicle, and relative device**
Verfahren zur Aktivierung und De-aktivierung einer Stop-Start Funktion in einem Fahrzeug und ein dazu gehörendes Gerät
Procédé d'activation et désactivation d'une fonction du type Stop-Start d'un véhicule et dispositif correspondant

(43) Date of publication of application: 23.06.2010
(73) Proprietor: Iveco S.p.A., 10156 Torino (IT)
(72) Inventor: Abbatantuoni, Vincenzo, 10134 Torino (IT); Vaglio, Paolo, 10128 Torino (IT)
(74) Representative: Borsano, Corrado

(56) References cited:
- EP-A- 1 108 862
- GB-A- 2 389 151
- JP-A- 2003 193 825
- US-A- 5 456 088
- US-A- 5 566 774
- US-A- 5 860 594
- US-B1- 6 335 574

## Description

### Application field of the invention

The present invention refers to a method for the activation and the deactivation of the stop and start function in a vehicle, and relative device.

### Description of the prior art

The Stop & Start function in a vehicle allows to stop and to immediately restart the engine when the vehicle is stationary but is about to be restarted, and is useful in a number of situations when there are numerous temporary stops of the vehicle, for example because of the traffic lights, during the delivery of goods, in the traffic jams etc., when it is useless to keep the engine started.

The usefulness of said energy saving function is evident since it allows to save fuel, but it also allows to reduce pollution, especially in urban areas.

However some problems arise concerning the proper management of said function, especially as regards the correct activation and deactivation of the function itself, in terms of efficiency for guaranteeing driving safety and proper management of the vehicle, see for example GB2389151, cited as the closest prior art, according to the preamble of claim 1. Moreover the management of this function should guarantee highly comfortable driving Summary of the invention

Therefore the aim of the present invention is to provide a method for the activation and the deactivation of the stop and start function in a vehicle, and its relative device, which solves the problems mentioned above.

The present invention relates in particular to a method for the activation and the deactivation of the stop and start function in a vehicle, and its relative device, as described more fully in the claims, which are an integral part of this description.

### Brief description of the Figures

Further purposes and advantages of the present invention will become clear from the following detailed description of a preferred embodiment (and relative alternative embodiments) and the drawings that are attached hereto, which are merely illustrative and not limitative, in which:
figures from 1 to 4 show flowcharts illustrating the method according to the present invention.

In the drawings the same reference numbers and letters are used to identify the same elements or components.

### Detailed description of preferred embodiments of the

### invention

First of all it is necessary to specify that the starting and the stopping of the engine by means of the stop and start function, if it is activated by the method according to this invention, may be determined by means of any method of the type known, controlled by the vehicular control unit, which it is not necessary to describe here.

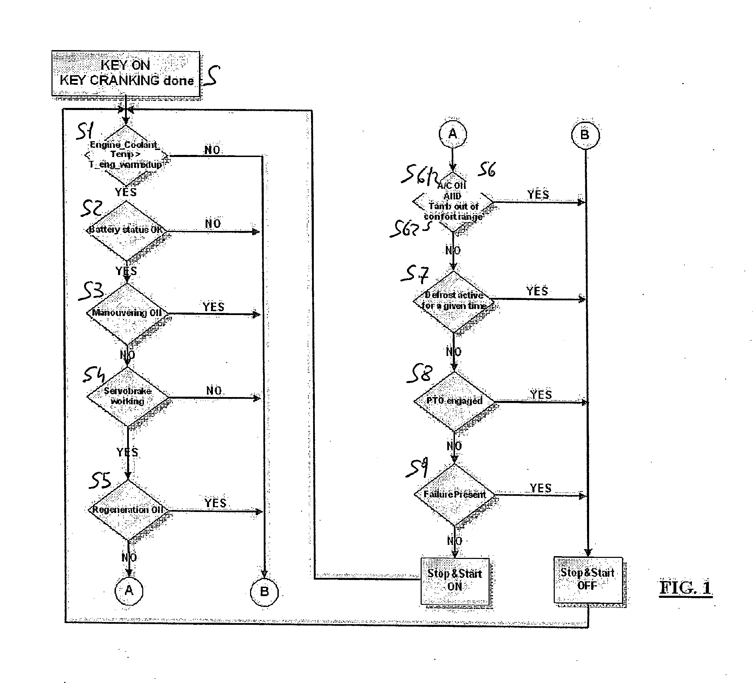

The diagram in figure 1 shows the conditions S1-S9 when the stop & start function is enabled or disabled (from now on it will be indicated by its acronym S&S): these conditions are suitable for guaranteeing the best functioning of the function in terms of driving safety and comfort. Acronyms identifying the functions carried out are indicated in the different blocks of the figure.

The description that follows refers to a situation wherein all the conditions described below are controlled and realized by means of an electronic control unit.

It is preferable that all of the following conditions concerning the safety guarantees are controlled, if their relative device that has to be controlled is in the vehicle, while the conditions concerning the driving comfort may be controlled individually and independently from the safety conditions.

Moreover, the disabling condition of the S&S function (S&S OFF) occurs when at least one condition among those described below takes place, while the enabling of the S&S function (S&S ON) occurs when the conditions described below take place together.

The beginning refers to the engine starting condition S by means of the key (key ON, key cranking done).

The first safety condition S1 to be verified for the enabling of the S&S function is that the engine has reached a high enough temperature (Engine coolant temp > T_eng_warmedup), therefore the temperature of the engine coolant has to be higher than a threshold (e.g. 40°C), otherwise the engine may be damaged by the repeated startings and stoppings.

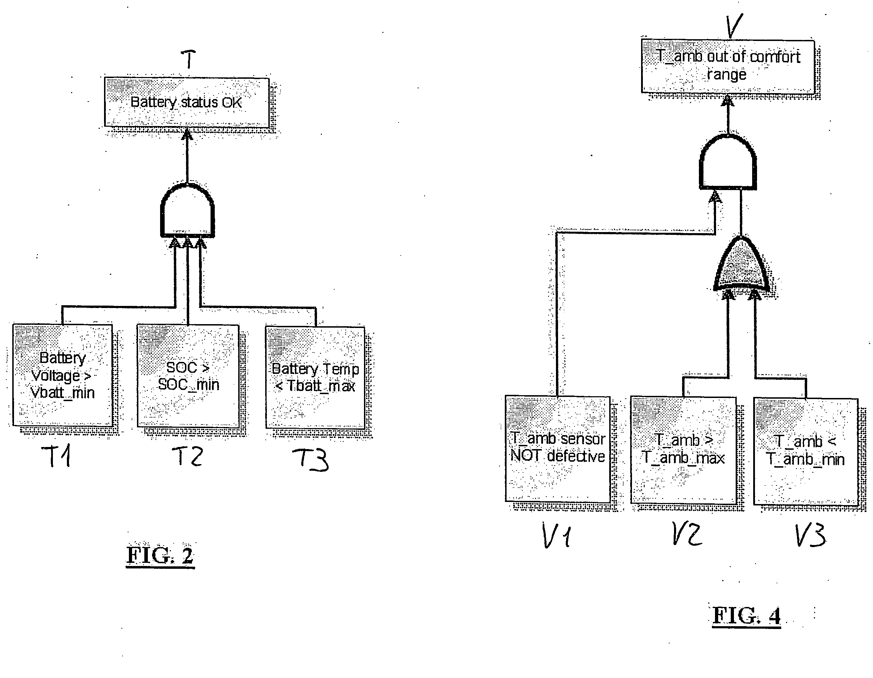

The next safety condition S2 to be verified for the enabling of the S&S function is that the battery status is valid T (Battery status OK). This condition is verified if three conditions occur at the same time (figure 2):
- battery voltage should be higher than 11V T1 (Battery Voltage > Vbatt_min);
- battery charging status (SOC > SOC_min) should be higher than a threshold T2 (about 75% of the maximum value): this numerical indication is available by means of a circuit connected to the battery, and is the result of the integral of the current, which is an indication of the level of the battery charging;
- the highest temperature of the battery should be lower than a maximum value T3, for example about 55° C (Battery Temp < Tbatt_max).

The next comfort condition S3 to be verified is the situation in which the vehicle is manoeuvring or parking (Manouvering ON), in order to avoid that the engine stops during the manoeuvres, when the vehicle is often stationary, or its speed is very low, with a forward or reverse gear. Therefore when manoeuvring or parking the S&S function is normally deactivated.

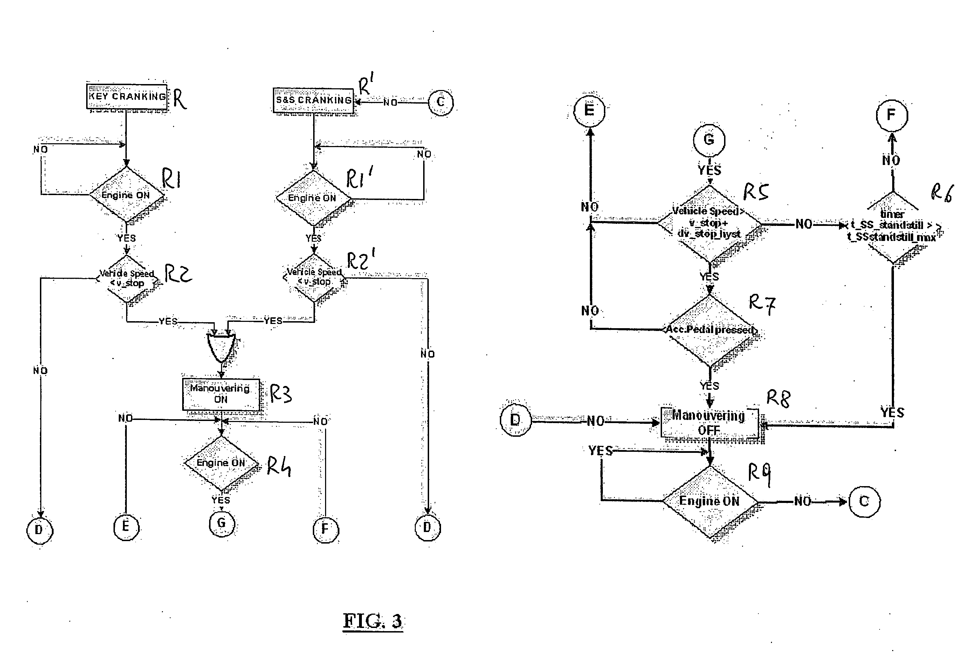

The function is described in more detail with reference to figure 3.

After the engine is started by means of the key R (KEY CRANKING), or also by means of the S&S (S&S CRANKING) R', if the detected condition R1, R1', R9 is that the engine is started (Engine ON), and the vehicle's speed is below a threshold R2, R2' for example lower than 3 km/h (Vehicle speed < v_stop), than the control of the manoeuvring or parking step is activated R3 and the S&S function is disabled.

In order to enable the S&S function again, it is necessary to verify that the engine is started R4 (Engine ON), that the vehicle's speed is higher than a threshold R5 (Vehicle speed > v_stop + dv_stop_hyst) given by the normal stop value (about < 3 km/h) added to an hysteresis value, which gives as a result 6-7 km/h, and that the accelerator pedal is pressed R7 (Acc.Pedal pressed). In this situation it is possible to quit the control of the manoeuvring or parking step R8 (Manouvering OFF) .

Moreover it is also possible to quit the control of the manoeuvring or parking step if the vehicle is for a long time in a low speed condition R6 (timer t_SSstandstill > t_SSstandstill_max); for example for more than 300 s, because this condition is supposed to be that of usual low speed travelling or that of a stationary vehicle.

Going back to the main diagram in fig. 1, the next safety condition is that the servo controlled devices, such as the servo brake, function properly S4, therefore the correct pressure in the servo brake circuit is checked (Servo brake working). In these devices, in fact, the fluid depression is maintained by the engine, by means of pumps drag by the driving belt: if the depression is not enough, stopping the engine would be dangerous, since the braking capacity of the system would get worse, therefore the S&S function is deactivated.

The next safety condition S5 is that the regeneration function is on (Regeneration ON), referring to the proper functioning of the internal filter of the particulate trap, if present. In order to clean the filter it is necessary that the engine is started, therefore if the regeneration of the filter is taking place, which is the case in particular conditions detected by an appropriate sensor of the device, the S&S function is inhibited.

The next condition S6 is a comfort condition (A/C ON, Tamb out of comfort range) wherein if the air conditioner compressor is functioning S61 and if the detected external temperature is out of a certain range for a certain time S62 (for example 300 s), the S&S function is inhibited, in order to keep the compressor working.

More in particular, with reference to figure 4, the condition of external temperature out of a certain range is verified V if the external temperature sensor is working (T_amb sensor V3 NOT defective), for a value lower than a minimum V3, e.g. 3° C (T_amb < T_amb_min), or higher than a maximum V2, e.g. 35° C (T_amb > T_amb_max).

S&S function is reactivated only when the external temperature value is again within the required values (T_amb_min e T_amb_max) and the air conditioner compressor is no longer functioning.

The next comfort condition S7 is that if the heated rear window is on for a sufficiently long time (Defrost active for a given time), for example 120 seconds, the S&S function is inhibited in order to allow that the demisting function keeps on working. The demisting function is actuated by means of the electric charging of a thermal resistance in the rear window, which may discharge the battery if it is operating for a long time with the engine stopped.

The next safety condition S8 is the verification that power takeoff (PTO engaged), which may be present, is engaged: if this function is activated, the S&S function is inhibited because it would determine the engine stopping, since usually the power takeoff is activated with the vehicle stationary. The next safety condition S9 to be verified is if a component or an important signal for the functioning of the S&S function presents a failure (Failure present). For example, it is possible to verify clutch, accelerator, brakes, engine speed, vehicle speed, and the relays of the engine ignition circuit. The device realizing the method described above is provided with a vehicular control unit equipped with an appropriate program and with a series of actuators or switches on the different vehicular elements that are controlled or used, most of them already present and known in the art, and which are appropriately connected to the control unit.

The vehicular control unit comprises a software for the realization of the method that is object of the invention, that may be realized by using design techniques known to the person skilled in the art.

The method described above may advantageously be realized by means of a computer program, which comprises program code means performing one or more steps of said method, when said program is run on a computer. For this reason the scope of the present patent is meant to cover also said computer program and the computer-readable means that comprises a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details.

## Claims

1. Method for the activation or the deactivation of the stop and start function in a vehicle, said vehicle comprising an engine previously started, at least a battery, at least a servo-controlled device, at least a particulate trap, the method comprising the steps of:
verification that the temperature of the engine coolant is higher than a temperature threshold (S1) ;
verification of the battery status (S2), that is valid (T) if:
- the battery voltage is higher than a voltage threshold (T1) ; and
- the battery charging status is higher than a charging status threshold (T2) ; and
- the battery temperature is lower than a maximum temperature value (T3) ;
verification of the proper functioning of the servo-controlled devices (S4);
verification of the engagement of a power takeoff (S8) if present;
verification of the absence of failures of a component or of a signal determining the functioning of the stop and start function (S9);
**characterized in that** it comprises
verification of the deactivation condition of a regeneration function (S5) of the internal filter of the particulate trap; said deactivation of the stop and start function being determined by the negative verification of at least one verification condition (S1,S2,S4,S5,S8,S9), while the activation of the stop and start function being determined by the positive verification of all the verification conditions.

2. Method as in claim 1, said vehicle further comprising an air conditioner, comprising a further step of:
- verification of the functioning of the air conditioner compressor (S61); and
- verification that the temperature outside the vehicle (S62) is out of a certain temperature range (V) for a certain time; and
- verification of the proper functioning of the external temperature sensor (V1) ; and
said deactivation of the stop and start function being determined by the positive verification of all the verification conditions, while the activation of the stop and start function being determined by the negative verification of the first two conditions (S61,S62) or of the last condition (V1) .

3. Method as in claim 1, comprising a further verification step of the manoeuvring or parking condition (S3) comprising:
verification that the engine is started (R1,R1',R9) ; and
verification that the speed of the vehicle both in forward and backward movement is lower than a threshold (R2,R2') ; and
verification that the time in which said manoeuvring condition lasts is lower than a threshold value (R6) ;
said deactivation of the stop and start function being determined by the positive verification of said further step, while the activation of the stop and start function being determined by the negative verification of at least one of the verification of said further step (S3).

4. Method according to claim 1, said vehicle further comprising at least a heated rear window, comprising a further verification step (S7) that the heated rear window is on for a time longer than a threshold ; said deactivation of the stop and start function being determined at the positive verification of said further step.

5. Method as in claim 1, wherein said verification of the absence of failures (S9) of a component or of an important signal for the functioning of the stop and start function is carried out on clutch, accelerator, brakes, engine speed, vehicle speed, relay of the engine ignition circuit.

6. Device for the activation and the deactivation of the stop and start function in a vehicle, comprising at least a control unit, and one or more actuators or switches on the different vehicular elements that are controlled or used, suitable for realizing the method of any of the previous claims.

7. Computer program comprising program code means suitable for performing the steps of any claim from 1 to 5, when such program is run on a computer.

8. Computer-readable means comprising a recorded program, said computer-readable means comprising program code means suitable for performing the steps according to the claims from 1 to 5, when said program is run on a computer.

## Patentansprüche

1. Verfahren für die Aktivierung oder die Deaktivierung der Stopp- und Startfunktion in einem Fahrzeug, wobei das Fahrzeug einen zuvor gestarteten Motor, mindestens eine Batterie, mindestens eine servogesteuerte Einrichtung, mindestens eine Partikelfalle umfasst, wobei das Verfahren die folgenden Schritte umfasst:
eine Verifikation, dass die Temperatur des Motorkühlmittels höher als ein Temperaturschwellenwert ist (S1);
eine Verifikation des Batteriestatus (S2), die gültig (T) ist, wenn:
- die Batteriespannung höher als ein Spannungsschwellenwert ist (T1); und
- der Batterieladestatus höher als ein Ladestatusschwellenwert ist (T2); und
- die Batterietemperatur geringer als ein maximaler Temperaturwert ist (T3);
eine Verifikation der korrekten Funktionsfähigkeit der servogesteuerten Einrichtungen (S4);
eine Verifikation des Einschaltens einer Nebenabtriebseinheit (S8), falls vorhanden;
eine Verifikation des Nichtvorhandenseins von Ausfällen einer Komponente oder eines Signals, wobei die Funktionsfähigkeit der Stopp- und Startfunktion bestimmt wird (S9);
**gekennzeichnet durch**
eine Verifikation der Deaktivierungsbedingung einer Regenerationsfunktion (S5) des internen Filters der Partikelfalle;
wobei die Deaktivierung der Stopp- und Startfunktion **durch** die negative Verifikation mindestens einer Verifikationsbedingung (S1, S2, S4, S5, S8, S9) bestimmt wird, während die Aktivierung der Stopp- und Startfunktion **durch** die positive Verifikation aller Verifikationsbedingungen bestimmt wird.

2. Verfahren nach Anspruch 1,
wobei das Fahrzeug ferner eine Klimaanlage umfasst, ferner umfassend die folgenden Schritte:
- eine Verifikation der Funktionsfähigkeit des Klimaanlagenkompressors (S61); und
- eine Verifikation, dass die Temperatur außerhalb des Fahrzeugs (S62) für eine bestimmte Zeit außerhalb eines bestimmten Temperaturbereichs liegt (V); und
- eine Verifikation der korrekten Funktionsfähigkeit des externen Temperatursensors (V1); und
wobei die Deaktivierung der Stopp- und Startfunktion durch die positive Verifikation aller Verifikationsbedingungen bestimmt wird, während die Aktivierung der Stopp- und Startfunktion durch die negative Verifikation der ersten beiden Bedingungen (S61, S62) oder der letzten Bedingung (V1) bestimmt wird.

3. Verfahren nach Anspruch 1,
umfassend einen weiteren Verifikationsschritt der Manöver- oder Parkbedingung (S3), umfassend:
eine Verifikation, dass der Motor gestartet ist (R1, R1', R9); und
eine Verifikation, dass die Geschwindigkeit des Fahrzeugs sowohl hinsichtlich Vorwärts- als auch Rückwärtsbewegung geringer als ein Schwellenwert ist (R2, R2'); und
eine Verifikation, dass die Zeit, während der die Manöverbedingung andauert, kleiner als ein Schwellenwert ist (R6);
wobei die Deaktivierung der Stopp- und Startfunktion durch die positive Verifikation des weiteren Schritts bestimmt wird, während die Aktivierung der Stopp- und Startfunktion durch die negative Verifikation von zumindest der Verifikation des weiteren Schritts (S3) bestimmt wird.

4. Verfahren nach Anspruch 1,
wobei das Fahrzeug ferner zumindest eine beheizte Heckscheibe umfasst, umfassend einen weiteren Verifikationsschritt (S7), dass die beheizte Heckscheibe für eine Zeit, die länger als ein Schwellenwert ist, eingeschaltet ist; wobei die Deaktivierung der Stopp- und Startfunktion bei der positiven Verifikation des weiteren Schritts bestimmt wird.

5. Verfahren nach Anspruch 1,
wobei die Verifikation des Nichtvorhandenseins von Ausfällen (S9) einer Komponente oder eines wichtigen Signals für die Funktionsfähigkeit der Stopp- und Startfunktion hinsichtlich Kupplung, Gaspedal, Bremsen, Motordrehzahl, Fahrzeuggeschwindigkeit, Relais des Motorzündkreises ausgeführt wird.

6. Einrichtung für die Aktivierung und die Deaktivierung der Stopp- und Startfunktion in einem Fahrzeug, umfassend mindestens eine Steuereinheit und einen oder mehrere Aktoren oder Schalter an den verschiedenen Fahrzeugelementen, die gesteuert oder verwendet werden, geeignet zum Realisieren des Verfahrens nach einem der vorstehenden Ansprüche.

7. Computerprogramm, umfassend ein Programmcodemittel, das zum Durchführen der Schritte nach einem der Ansprüche 1 bis 5 geeignet ist, wenn solch ein Programm an einem Computer ausgeführt wird.

8. Von einem Computer lesbares Mittel, umfassend ein aufgezeichnetes Programm, wobei das von einem Computer lesbare Mittel ein Programmcodemittel umfasst, das zum Durchführen der Schritte gemäß den Ansprüchen 1 bis 5 geeignet ist, wenn das Programm an einem Computer ausgeführt wird.

## Revendications

1. Procédé pour l'activation ou la désactivation de la fonction marche - arrêt dans un véhicule, ledit véhicule comprenant un moteur préalablement démarré, au moins une batterie, au moins un dispositif servo-commandé, au moins un piège à particules, le procédé comprenant les étapes consistant à :
vérifier que la température du liquide de refroidissement du moteur est supérieure à un seuil de température (S1) ;
vérifier le statut (S2) de la batterie, qui est valide (T) si :
la tension de la batterie est supérieure à un seuil de tension (T1) ; et
le statut de charge de la batterie est supérieur à un seuil de statut de charge (T2) ; et
la température de la batterie est inférieure à une valeur de température maximum (T3) ;
vérifier le bon fonctionnement des dispositifs servocommandés (S4) ;
vérifier la mise en prise d'une prise de force (S8) si elle existe ;
vérifier l'absence de défaillances d'un composant ou d'un signal déterminant le fonctionnement de la fonction marche - arrêt (S9) ;
**caractérisé en ce qu'**il comprend l'étape consistant à :
vérifier la condition de désactivation d'une fonction de régénération (S5) du filtre interne du piège à particules ;
ladite désactivation de la fonction marche - arrêt étant déterminée par la vérification négative d'au moins une condition de vérification (S1, S2, S4, S5, S8, S9), alors que l'activation de la fonction marche - arrêt est déterminée par la vérification positive de toutes les conditions de vérification.

2. Procédé selon la revendication 1, ledit véhicule comprenant en outre un dispositif de conditionnement d'air, comprenant une étape supplémentaire consistant à :
vérifier le fonctionnement du compresseur du dispositif de conditionnement d'air (S61) ; et
vérifier que la température à l'extérieur du véhicule (S62) n'est pas dans une certaine plage de température (V) pendant un certain temps ; et
vérifier le bon fonctionnement du capteur de température externe (V1) ; et
ladite désactivation de la fonction marche - arrêt étant déterminée par la vérification positive de toutes les conditions de vérification, alors que l'activation de la fonction marche - arrêt est déterminée par la vérification négative des deux premières conditions (S61, S62) ou de la dernière condition (V1).

3. Procédé selon la revendication 1, comprenant une étape de vérification supplémentaire consistant à vérifier la condition de manoeuvre ou de stationnement (S3) comprenant les étapes consistant à :
vérifier que le moteur est démarré (R1, R1', R9) ; et
vérifier que la vitesse du véhicule à la fois en marche avant et en marche arrière est inférieure à un seuil (R2, R2') ; et
vérifier que le temps que dure ladite condition de manoeuvre est inférieure à une valeur de seuil (R6) ;
ladite désactivation de la fonction marche - arrêt étant déterminée par la vérification positive de ladite étape supplémentaire, alors que l'activation de la fonction marche - arrêt est déterminée par la vérification négative d'au moins une vérification de ladite étape supplémentaire (S3).

4. Procédé selon la revendication 1, ledit véhicule comprenant en outre au moins une lunette arrière chauffée, comprenant une étape de vérification supplémentaire (S7) que la lunette arrière chauffée est en fonctionnement pendant un laps de temps plus long qu'un seuil ; ladite désactivation de la fonction marche - arrêt étant déterminée par la vérification positive de ladite étape supplémentaire.

5. Procédé selon la revendication 1, dans lequel ladite vérification de l'absence de défaillances (S9) d'un composant ou d'un signal important pour le fonctionnement de la fonction marche - arrêt est réalisée sur l'embrayage, l'accélérateur, les freins, la vitesse du moteur, la vitesse du véhicule, le relais du circuit d'allumage du moteur.

6. Dispositif pour l'activation et la désactivation de la fonction marche - arrêt dans un véhicule, comprenant au moins une unité de commande et un ou plusieurs actionneurs ou commutateurs sur les différents éléments de véhicule qui sont commandés ou utilisés, appropriés pour réaliser le procédé selon l'une quelconque des revendications précédentes.

7. Programme informatique comprenant des moyens de code de programme appropriés pour réaliser les étapes selon l'une quelconque des revendications 1 à 5, lorsqu'un tel programme fonctionne sur un ordinateur.

8. Moyens lisibles par ordinateur comprenant un programme enregistré, lesdits moyens lisibles par ordinateur comprenant des moyens de code de programme appropriés pour réaliser les étapes selon les revendications 1 à 5, lorsque ledit programme fonctionne sur un ordinateur.
